# DEMANDE DE BREVET EUROPEEN

(11) **EP 1 711 026 A2**
(43) Date de publication de la demande: **11.10.2006**
(21) Numéro de dépôt: 06112115.8
(22) Date de dépôt: 31.03.2006
(51) Int. Cl.: H04Q 7/34

(54) **dispositif d'analyse cartographique de données d'analyse, en vue de l'optimisation d'un réseau de communication**

(30) Priorité: 06.04.2005 FR 0503410
(71) Demandeur: EVOLIUM SAS, 75008 Paris (FR)
(72) Inventeur: Houllier, Jean-Roch, 91240, SAINT MICHEL SUR ORGE (FR); Brethereau, Alain, 78220, VIROFLAY (FR); Brigant, Eric, 78140, VELIZY-VILLACOUBLAY (FR); De Mathan, Béatrix, 75016, PARIS (FR); Landrault, Antoine, 78120, RAMBOUILLET (FR)
(74) Mandataire: El Manouni, Josiane

(57) **Abrégé**

Un dispositif (D) est dédié à l'analyse de données d'analyse (D), pour un système d'optimisation et/ou de gestion et/ou de supervision (OO) d'un réseau de communication comportant des éléments de réseau (C1-C3) de positions géographiques connues et par lesquels passent des trafics définis localement par des données d'analyse. Ce dispositif comprend, d'une part, une interface (I) permettant de sélectionner des éléments de réseau, au moins une analyse à effectuer sur des données d'analyse choisies relatives aux éléments de réseau sélectionnés, et au moins un type de résultat d'analyse, et d'autre part, des moyens d'analyse (MA) chargés d'effectuer chaque analyse sélectionnée sur les données d'analyse choisies, compte tenu des positions respectives des éléments de réseau sélectionnés, et de délivrer sous une forme cartographique des résultats d'analyse conformément au type sélectionné, en vue d'une exploitation par le système d'optimisation et/ou de gestion et/ou de supervision de réseau (OO).

## Description

L'invention concerne le domaine des réseaux de communication, et plus particulièrement l'optimisation et la gestion ou la supervision du fonctionnement et/ou de la configuration de tels réseaux.

En raison des coûts de déploiement et de fonctionnement des réseaux de communication il est important pour les opérateurs d'optimiser fréquemment le fonctionnement et/ou la configuration de leurs réseaux. Cette optimisation est destinée à utiliser au mieux les ressources de communication des réseaux, compte tenu, notamment, des accords de niveau de service passés avec leurs clients utilisateurs, et/ou à permettre la densification ou l'extension d'un réseau. Dans le cas des réseaux radio mobiles ou cellulaires les ressources de communication, en terme de canaux radio, constituent une contrainte importante notamment du fait que leur réutilisation peut entraîner des interférences.

Pour optimiser un réseau et donc gérer l'utilisation de ses ressources, il faut disposer de données d'analyse, comme par exemple des données de trafic qui définissent les trafics qui passent par les éléments de réseau, ou des paramètres de réseau, ou encore des indicateurs, par exemple de qualité de service (QoS).

On entend ici par « données de trafic » des valeurs de paramètre(s) ou d'indicateur(s) pouvant être mesurées ou estimées par un système de gestion de réseau, comme par exemple un NMS (pour « Network Management System »). Par ailleurs, on entend ici par « élément de réseau » tout constituant (physique et/ou logique) d'un réseau par lequel passent des trafics définis localement par des valeurs de paramètre(s) ou d'indicateur(s). Il pourra donc s'agir, par exemple, d'une cellule dans laquelle des terminaux mobiles peuvent établir ou poursuivre des communications, ou d'un équipement de réseau, tel qu'un routeur ou une station de base.

Comme le sait l'homme de l'art, la gestion des paramètres (ou indicateurs) de réseau est une tâche difficile, complexe et de surcroît permanente en cas d'extension et/ou de densification du réseau. Cette gestion nécessite l'utilisation d'un système (ou outil) d'optimisation de réseau, comme par exemple celui appelé RNO® (pour « Radio Network Optimization »), développé par la société ALCATEL pour les réseaux radio cellulaires. Un tel système permet de suivre l'évolution de la qualité de service (ou QoS) au sein de certains éléments de réseau, comme par exemple des cellules, de diagnostiquer des causes de problèmes, notamment de qualité de service, de proposer des solutions pour résoudre ces problèmes, et de définir des ensembles d'objets (ou « object zones ») en fonction de critère(s), comme par exemple l'appartenance à une zone géographique donnée, afin de suivre et d'étudier la qualité de service au sein de certains au moins de ces ensembles.

On entend ici par « objet » un élément de réseau physique, comme par exemple une cellule, ou logique, comme par exemple une adjacence définie à partir d'au moins un mouvement d'une cellule vers une autre. Des informations complémentaires sur les ensembles d'objets (ou « object zones ») peuvent notamment être trouvées dans le document brevet présentant le numéro de dépôt FR 04 53275.

Le niveau d'optimisation offert par les systèmes d'optimisation de réseau actuels est limité par le fait qu'ils ne gèrent qu'une partie des paramètres impliqués dans l'utilisation des ressources (par exemple, ils ne prennent pas en compte l'impact du comportement des abonnés et n'offrent qu'une analyse cartographique souvent mineure).

L'invention a donc pour but d'améliorer la situation, notamment dans le cas des réseaux de communication radio.

Elle propose à cet effet un dispositif dédié à l'analyse de données d'analyse, pour un système (ou outil) d'optimisation et/ou de gestion et/ou de supervision d'un réseau de communication comportant des éléments de réseau de positions géographiques connues et par lesquels passent des trafics définis localement par des données d'analyse.

Ce dispositif d'analyse se caractérise par le fait qu'il comprend :
- une interface permettant de sélectionner, d'une première part, des éléments de réseau, d'une deuxième part, au moins une analyse à effectuer sur des données d'analyse choisies relatives aux éléments de réseau sélectionnés, et d'une troisième part, au moins un type de résultat d'analyse, et
- des moyens d'analyse chargés d'effectuer chaque analyse sélectionnée sur les données d'analyse choisies, compte tenu des positions respectives des éléments de réseau sélectionnés, et de délivrer sous une forme cartographique des résultats d'analyse conformément au type sélectionné, en vue d'une exploitation par le système d'optimisation et/ou de gestion et/ou de supervision de réseau.

Le dispositif d'analyse selon l'invention peut comporter d'autres caractéristiques qui peuvent être prises séparément ou en combinaison, et notamment :
- son interface peut par exemple permettre la définition d'une zone géographique d'analyse contenant les éléments de réseau sélectionnés ;
   ➢ cette définition de zone géographique d'analyse peut par exemple se faire en fonction d'au moins un critère choisi, comme par exemple un critère d'appartenance à une zone de géométrie prédéfinie au sein d'une région ou un critère d'appartenance à un environnement d'un type choisi au sein d'une région ;
   ➢ ses moyens d'analyse peuvent être chargés d'effectuer chaque analyse sélectionnée sur les données d'analyse choisies, relatives à tous les éléments de réseau contenus dans la zone géographique d'analyse ;
- il peut comprendre des premiers moyens de stockage de données représentatives des positions géographiques des éléments de réseau. Dans ce cas, ses moyens d'analyse peuvent être chargés d'accéder aux premiers moyens de stockage afin d'extraire les données de position des éléments de réseau sélectionnés, en vue d'effectuer les analyses sélectionnées sur les données d'analyse choisies ;
- il peut comprendre des seconds moyens de stockage de données définissant des analyses. Dans ce cas, ses moyens d'analyse peuvent être chargés d'accéder aux seconds moyens de stockage afin d'extraire les données qui définissent certaines au moins des analyses sélectionnées, en vue d'effectuer ces analyses sur les données d'analyse choisies ;
- son interface peut par exemple permettre la définition de certaines au moins des analyses sélectionnées et/ou de nouvelles analyses ;
- parmi les analyses possibles, on peut notamment citer les analyses de convergence et/ou divergence de données d'analyse par rapport à des données de référence, les analyses d'adéquation et/ou d'inadéquation de capacités d'éléments de réseau en fonction de trafics observés, les analyses d'interférence entre éléments de réseau voisins, les analyses d'utilisation d'éléments de réseau par rapport à un territoire, et les analyses de flux de trafics ;
- certains résultats d'analyses peuvent être délivrés sous la forme d'une liste d'objets destinée à permettre la définition ou l'affinage d'ensembles d'objets (ou « object zones »).

L'invention propose également un système d'optimisation et/ou de gestion et/ou de supervision de réseau équipé d'un dispositif d'analyse du type de celui présenté ci-avant.

Ce système d'optimisation et/ou de gestion et/ou de supervision de réseau peut être chargé de définir ou d'affiner des résultats d'analyse (qui sont délivrés par le dispositif d'analyse) en vue de leur exploitation visuelle, et/ou de définir ou d'affiner (à partir des résultats d'analyse délivrés par le dispositif d'analyse) des ensembles d'objets (ou « object zones ») regroupant chacun des éléments de réseau, et/ou d'effectuer des diagnostics de cause(s) de problème(s) survenant au sein du réseau de communication à partir de résultats d'analyse délivrés par le dispositif d'analyse.

L'invention est particulièrement bien adaptée, bien que de façon non exclusive, aux réseaux de communication radio, notamment de type cellulaire (ou mobile). Elle concerne d'une manière générale tout type de réseau de communication, y compris les réseaux fixes commutés (plus connus sous les acronymes anglais POTS (pour « Plain Old Telephone Service ») et PSTN (pour « Public Switched Telephony Network »)), ainsi que les réseaux locaux filaires (plus connus sous l'acronyme anglais LAN (pour « Local Area Network »)) ou sans fil (plus connus sous l'acronyme anglais WLAN (pour « Wireless LAN »)).

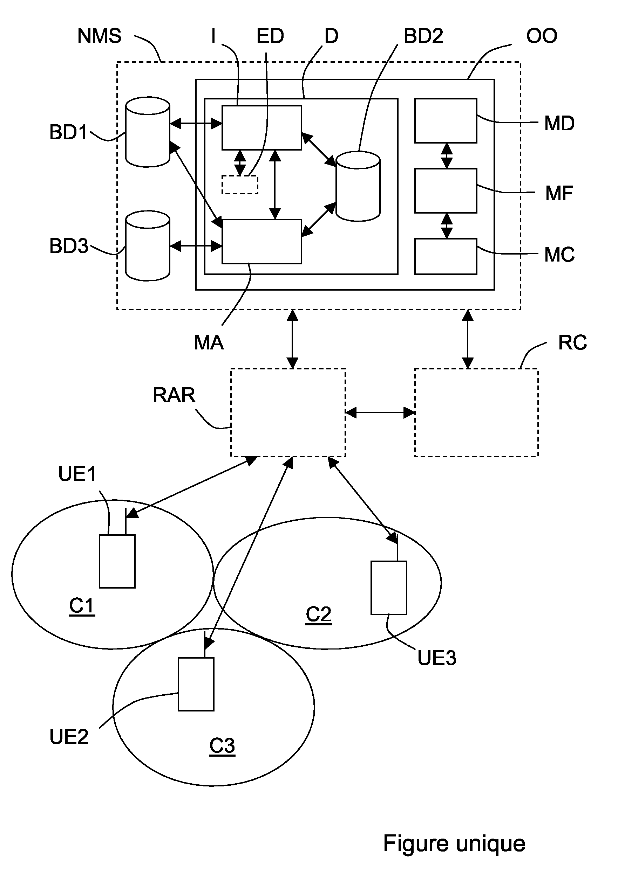

D'autres caractéristiques et avantages de l'invention apparaîtront à l'examen de la description détaillée ci-après, et du dessin annexé, sur lequel l'unique figure illustre de façon très schématique et fonctionnelle un réseau de communication cellulaire équipé d'un système d'optimisation et/ou de gestion et/ou de supervision de réseau muni d'un exemple de réalisation d'un dispositif d'analyse selon l'invention. Le dessin annexé pourra non seulement servir à compléter l'invention, mais aussi contribuer à sa définition, le cas échéant.

L'invention a pour objet de permettre l'obtention de données d'analyses cartographiques, en vue d'une optimisation du fonctionnement et/ou de la configuration d'un réseau de communication, et donc de l'utilisation de ses ressources de communication.

On considère dans ce qui suit que le réseau de communication est un réseau radio cellulaire (ou mobile), comme par exemple un réseau GSM, ou GPRS/EDGE, ou encore UMTS ou WiMax. Par conséquent, les ressources sont ici des canaux radio. Mais, l'invention est adaptée à tout type de réseau de communication, et notamment aux réseaux fixes commutés (POTS ou PSTN) et aux réseaux locaux filaires (LAN) ou sans fil (WLAN).

Comme cela est illustré sur l'unique figure un réseau radio cellulaire peut, d'une façon très schématique mais néanmoins suffisante à la compréhension de l'invention, être résumé à un réseau de commutation (ou « Core Network ») RC couplé à un réseau d'accès radio RAR (appelé UTRAN dans le cas d'un réseau UMTS et BSS dans le cas d'un réseau GSM), lui-même raccordé à un système de gestion de réseau NMS (pour « Network Management System »).

Le réseau d'accès radio RAR comporte des stations de base (appelées Node Bs dans le cas d'un réseau UMTS et BTSs dans le cas d'un réseau GSM) et des contrôleurs de réseau radio ou noeuds (appelés RNCs dans le cas d'un réseau UMTS et BSCs dans le cas d'un réseau GSM), raccordés entre eux ainsi qu'à un gestionnaire de réseau d'accès. Les stations de base sont par ailleurs reliées au système de gestion de réseau NMS via les contrôleurs de réseau radio.

Chaque station de base (Node B ou BTS) est associée à au moins une cellule Ci couvrant une zone radio dans laquelle des terminaux mobiles UEj peuvent établir (ou poursuivre) des liaisons radio.

On entend ici par « terminal mobile » tout terminal de communication mobile ou portable capable d'échanger des données sous la forme de signaux radio, soit avec un autre terminal ou équipement de réseau, via leur(s) réseau(x) de rattachement, soit avec son propre réseau de rattachement. Il pourra donc s'agir, par exemple, de téléphones mobiles, ou d'ordinateurs fixes ou portables ou d'assistants personnels numériques (ou PDA) équipés d'un module de communication radio.

Dans l'exemple illustré, trois cellules (C1-C3, i = 1 à 3) ont été représentées. Mais, l'indice i peut prendre n'importe quelle valeur non nulle. Par ailleurs, dans l'exemple illustré, trois terminaux mobiles (UE1-UE3, j = 1 à 3) ont été représentés. Mais, l'indice j peut prendre n'importe quelle valeur non nulle.

Le réseau de commutation RC comprend des équipements de réseau raccordés aux contrôleurs de réseau radio (RNCs ou BSCs), à un gestionnaire de réseau, ainsi qu'au système de gestion de réseau NMS.

Afin de permettre l'optimisation de l'utilisation des ressources de communication du réseau radio (cellulaire), le système de gestion de réseau NMS comprend (ou est couplé à) un système (ou outil) d'optimisation et/ou de gestion et/ou de supervision de réseau OO, comme par exemple le système RNO® présenté dans la partie introductive.

L'invention propose un dispositif d'analyse de données d'analyse D destiné à alimenter en résultats d'analyses cartographiques le système (ou outil) d'optimisation et/ou de gestion et/ou de supervision de réseau 00. Dans l'exemple de réalisation illustré, non limitatif, le dispositif de traitement D est intégré dans le système (ou outil) d'optimisation et/ou de gestion et/ou de supervision de réseau OO.

Le dispositif d'analyse de données d'analyse D, selon l'invention, comprend au moins une interface de type homme/machine I et un module MA dédié à l'analyse de données d'analyse choisies.

Comme indiqué dans la partie introductive, on entend ici par « données d'analyse » des données de trafic, ou des paramètres de réseau, ou encore des indicateurs, par exemple de qualité de service (QoS). Par ailleurs, on entend ici par « données de trafic » des valeurs de paramètre(s) ou d'indicateur(s) pouvant être mesurées ou estimées par le système de gestion de réseau NMS. Par ailleurs, on entend ici par « élément de réseau » tout constituant (physique et/ou logique) d'un réseau par lequel passent des trafics définis localement par des valeurs de paramètre(s) ou d'indicateur(s). Il pourra donc s'agir, par exemple, d'une cellule Ci dans laquelle des terminaux mobiles UEj peuvent établir ou poursuivre des communications, ou d'un équipement de réseau, tel qu'un routeur ou une station de base (BTS ou Node B).

Selon l'invention, l'interface 1 permet à un utilisateur d'effectuer au moins trois types de sélection : une sélection d'éléments de réseau, une sélection d'au moins une analyse à effectuer sur des données d'analyse choisies relatives aux éléments de réseau sélectionnés, et une sélection d'au moins un type de résultat d'analyse.

La sélection d'éléments de réseau est préférentiellement la première opération effectuée. Pour effectuer cette sélection, l'interface I doit accéder à des données représentatives des positions géographiques des différents éléments de réseau. Ces données peuvent être des identifiants d'éléments de réseau stockés en correspondance de positions bi ou tri-dimensionnelles relatives ou absolues, ou plus simplement des identifiants d'éléments de réseau dont on connaît par ailleurs les positions bi ou tri-dimensionnelles relatives ou absolues, au moins approximativement.

Ces données représentatives des positions géographiques sont stockées dans des premiers moyens de mémorisation BD1, qui peuvent se présenter sous n'importe quelle forme, et par exemple sous la forme d'une base de données ou d'une mémoire. Comme cela est illustré sur l'unique figure, ces premiers moyens de mémorisation BD1 sont généralement implantés dans le NMS. Mais, cela n'est pas une obligation. Ils pourraient en effet être implantés dans le système d'optimisation et/ou de gestion et/ou de supervision de réseau OO ou bien dans le dispositif d'analyse D.

La sélection peut se faire de différentes manières.

Une manière peut consister à permettre à l'utilisateur de sélectionner chaque élément de réseau dans une liste affichée sur un écran ou dans une région affichée sur une carte matérialisant une partie au moins du réseau.

Une autre manière peut consister à permettre à l'utilisateur de définir, au moyen de l'interface I, une zone géographique d'analyse contenant les éléments de réseau sélectionnés. Tout type de définition peut être envisagé.

Ainsi, l'utilisateur peut fournir des coordonnées définissant une zone sur une carte affichée, matérialisant une partie au moins du réseau.

Dans une variante, l'interface I peut mettre à la disposition de l'utilisateur des zones de formes prédéfinies, comme par exemple des carrés ou des cercles. Dans ce cas, l'utilisateur doit indiquer sur une carte affichée, matérialisant une partie au moins du réseau, l'emplacement de la zone de forme choisie, ainsi qu'éventuellement la (ou les) dimension(s) caractéristique(s) de cette zone.

Dans une autre variante, l'utilisateur définit sa zone géographique d'analyse en fonction d'au moins un critère choisi. Parmi les différents critères que l'on peut utiliser, on peut par exemple citer le critère d'appartenance à une zone de géométrie prédéfinie au sein d'une région affichée sur une carte matérialisant une partie au moins du réseau. Dans ce cas, la région affichée peut être pré-décomposée en zones parmi lesquelles l'utilisateur effectue sa sélection (une ou plusieurs zones peuvent être sélectionnées), ou bien l'utilisateur peut signaler au dispositif d'analyse D l'endroit de la carte où il souhaite placer le centre de la ou des zones qu'il veut sélectionner. Un autre critère peut par exemple être un critère d'appartenance à un environnement d'un type choisi au sein d'une région affichée sur une carte matérialisant une partie au moins du réseau. Dans ce cas, l'utilisateur fournit à l'interface le type d'environnement qu'il désire et l'interface se charge de déterminer la ou les zones de la région affichée qui correspond(ent) au type d'environnement fourni. Parmi les différents types d'environnement on peut par exemple citer l'environnement urbain, éventuellement dense, ou l'environnement rural, éventuellement accidenté, ou l'environnement suburbain, et plus généralement tout type d'environnement pouvant être caractérisé par un ou plusieurs critères de sélection fondés par exemple sur des critères géographiques, de géo-marketing, de paramètres, ou de topologie du réseau. Dans cette dernière situation, les premiers moyens de mémorisation BD1 ou d'autres moyens de mémorisation dédiés stockent des définitions de zones en fonction de types d'environnement tels que définis ci-dessus.

Lorsqu'une zone est sélectionnée (ou définie), tous les éléments de réseau qui se trouvent situés à l'intérieur de cette zone sont préférentiellement sélectionnés. Mais, cela n'est pas obligatoire. On pourrait en effet envisager que l'interface I affiche sur un écran tous les éléments de réseau situés à l'intérieur de la zone sélectionnée (ou définie) afin que l'utilisateur puisse sélectionner certains au moins d'entre eux.

La sélection d'analyse(s) s'effectue préférentiellement après la sélection d'éléments de réseau. Elle peut se faire au sein d'une liste d'analyses prédéfinies et/ou par la fourniture de paramètres définissant chaque analyse souhaitée (l'utilisateur peut notamment créer des analyses en combinant éventuellement des critères géographiques, de géo-marketing, de paramètres, ou de topologie du réseau).

Lorsque la sélection se fait au moins en partie au sein d'une liste, l'interface I doit accéder à des données définissant les différentes analyses prédéfinies. Ces données peuvent être de simples identifiants désignant des analyses que l'utilisateur est censé connaître, ou bien des paramètres dont les valeurs sont fixées ou à fixer.

Ces données définissant les analyses sont stockées dans des deuxièmes moyens de mémorisation BD2, qui peuvent se présenter sous n'importe quelle forme, et par exemple sous la forme d'une base de données ou d'une mémoire. Comme cela est illustré sur l'unique figure, ces deuxièmes moyens de mémorisation BD2 sont préférentiellement implantés dans le dispositif d'analyse D. Mais, cela n'est pas une obligation. Ils pourraient en effet être implantés dans le système d'optimisation et/ou de gestion et/ou de supervision OO ou bien dans le NMS.

Lorsque la sélection se fait au moins en partie par la fourniture de paramètres, on peut par exemple mettre à la disposition de l'utilisateur un éditeur ED couplé à l'interface I. Comme cela est illustré sur l'unique figure, cet éditeur ED peut être implanté dans le dispositif d'analyse D. Mais, cela n'est pas une obligation. Il pourrait en effet être implanté dans le système d'optimisation et/ou de gestion et/ou de supervision OO ou bien dans le NMS.

Dans ce cas, l'utilisateur définit chaque analyse au moyen de l'éditeur ED, par exemple en fournissant chaque paramètre et sa ou ses valeurs associée(s). L'interface I récupère alors chaque définition d'analyse et la transmet au module d'analyse MA.

Lorsqu'une analyse sélectionnée concerne obligatoirement un ou plusieurs types de données d'analyse, l'utilisateur n'a donc pas à spécifier les données d'analyse qui vont devoir être analysées par le module d'analyse MA. En revanche, lorsqu'une analyse sélectionnée peut concerner un (ou plusieurs) type(s) de données qui dépend(ent) des circonstances, l'utilisateur doit spécifier les données d'analyse qui vont devoir être analysées par le module d'analyse MA.

Tout type d'analyse de données d'analyse peut être envisagé.

Parmi les différents types d'analyses possibles, on peut notamment citer les analyses de convergence et/ou divergence de données d'analyse par rapport à des données de référence. Ce premier exemple d'analyse consiste à comparer des valeurs opérationnelles de paramètres logiques d'éléments de réseau (par exemple des cellules Ci) à des valeurs de référence, de manière à déterminer leurs proximités respectives (en terme d'écart) par rapport auxdites valeurs de référence.

On peut également citer les analyses d'adéquation et/ou d'inadéquation de capacités d'éléments de réseau en fonction de trafics observés ou de valeurs de certains paramètres ou indicateurs. Ce deuxième exemple d'analyse consiste à comparer les capacités déclarées d'éléments de réseau (par exemple des cellules Ci) aux valeurs des trafics ou valeurs de certains paramètres ou indicateurs qui sont mesurées (ou estimées) au niveau desdits éléments de réseau (en fonction de la classe d'occupation du sol (ou « land usage »)), par exemple au moyen d'un ou plusieurs indicateurs de qualité de service, de manière à déterminer leurs niveaux d'adéquation respectifs.

On peut également citer les analyses d'interférence entre éléments de réseau voisins. Ce troisième exemple d'analyse consiste par exemple à comparer les fréquences utilisées par chaque élément de réseau sélectionné (par exemple une cellule Ci) aux fréquences utilisées par les éléments de réseau voisins, en tenant compte de leurs éventuels sauts de fréquence (ou « hopping ») respectifs et éventuellement de la typologie de l'interférence (par exemple co-canal ou canal adjacent), de manière à déterminer d'éventuelles zones d'interférence.

On peut également citer les analyses d'utilisation d'éléments de réseau par rapport à une classe d'occupation du sol. Ce quatrième exemple d'analyse consiste par exemple à associer chaque élément de réseau sélectionné (par exemple une cellule Ci) à la classe d'occupation du sol (ou à une autre typologie - ou caractéristique de la zone - d'ordre géographique ou géo-marketing, par exemple) correspondant à sa localisation. Par exemple, une cellule peut être caractérisée en fonction du type de réseau de communication qui la traverse (routes nationales, routes départementales, autoroutes, fleuves, voies ferrées) et/ou d'une autre caractéristique d'occupation du sol (par exemple une zone commerciale, une zone de bureau, ou une zone d'habitation).

On peut également citer les analyses de flux de trafic. Ce cinquième exemple d'analyse consiste par exemple à étudier les différents flux de trafic observés dans une zone, compte tenu des relations d'adjacence déclarées et disponibles dans cette zone, de manière à déterminer des adjacences en fonction des trafics observés.

Les exemples d'analyse précités ne sont pas limitatifs. Tout type d'analyse peut en effet être envisagé. Par ailleurs, ces analyses peuvent être prédéfinies ou définies par l'utilisateur en fonction de ses besoins.

La sélection de type(s) de résultat s'effectue préférentiellement après la sélection des analyses et des éventuelles données d'analyse associées. Elle dépend généralement de l'analyse sélectionnée. Mais, pour une analyse donnée il peut y avoir plusieurs modes de présentation de ses résultats. Dans ce cas, l'interface I peut afficher sur l'écran, à l'attention de l'utilisateur, une liste de types de résultat d'analyse prédéfinis. Pour ce faire, l'interface I doit accéder à des données définissant les différents types de résultats d'analyse prédéfinis. Ces données peuvent être de simples identifiants désignant des types de résultats d'analyse que l'utilisateur est censé connaître, ou bien des paramètres dont les valeurs sont fixées ou à fixer. Ces données définissant les analyses sont par exemple stockées dans les deuxièmes moyens de mémorisation BD2. L'utilisateur n'a donc qu'à choisir le type de résultat d'analyse qu'il souhaite pour chaque analyse qu'il a sélectionnée (il peut éventuellement avoir à choisir des valeurs de paramètres).

Tout type de résultat cartographique correspondant à une analyse peut être envisagé.

Ainsi, dans le cas du premier exemple d'analyse, présenté ci-avant, on peut par exemple délivrer une carte de convergence et/ou divergence mettant en évidence, par exemple avec des niveaux de gris différents ou des combinaisons de couleurs, la plus ou moins grande proximité (en terme d'écart) de chaque paramètre d'élément de réseau sélectionné par rapport à la valeur de référence correspondante.

Dans le cas du deuxième exemple d'analyse, présenté ci-avant, on peut par exemple délivrer une carte d'adéquation et/ou d'inadéquation mettant en évidence, par exemple avec des niveaux de gris différents ou des combinaisons de couleurs, la plus ou moins grande capacité de chaque élément de réseau sélectionné en fonction de trafics observés et des zones d'occupation du sol associées ou d'autres critères.

Dans le cas du troisième exemple d'analyse, présenté ci-avant, on peut par exemple délivrer une carte d'interférence mettant en évidence les zones dans lesquelles peuvent survenir des interférences, éventuellement en incluant le type d'interférence (« co-canal » ou « canal-adjacent »).

Dans le cas du quatrième exemple d'analyse, présenté ci-avant, on peut par exemple délivrer une carte affichant les cellules (par exemple) de manière différente selon la classe d'occupation du sol dont elles font partie (ou selon toute autre classification). L'utilisateur peut notamment choisir le nombre et le type de classes. Une carte peut par exemple afficher les cellules qui sont traversées par un axe routier ou une voie ferrée majeur(e) et qui sont situées dans ou à moins de 200 mètres d'une zone commerciale.

Dans le cas du cinquième exemple d'analyse, présenté ci-avant, on peut par exemple délivrer une carte mettant en évidence les différentes adjacences en fonction des trafics observés.

Une fois les sélections terminées, l'interface I transmet leurs définitions et/ou désignations au module d'analyse MA.

Selon l'invention, le module d'analyse MA est chargé d'effectuer chaque analyse, qui a été sélectionnée par l'utilisateur au moyen de l'interface I. Pour ce faire, il doit tout d'abord accéder :
- aux premiers moyens de mémorisation BD1 pour extraire les données de position des éléments de réseau sélectionnés par l'utilisateur et dont les identifiants lui ont été communiqués par l'interface I,
- aux seconds moyens de mémorisation BD2 pour extraire les données qui définissent certaines au moins des analyses sélectionnées par l'utilisateur et dont les identifiants lui ont été communiqués par l'interface I. Si une analyse sélectionnée n'est pas répertoriée dans les seconds moyens de mémorisation BD2 du fait qu'elle a été définie par l'utilisateur (par exemple au moyen de l'éditeur ED), alors les paramètres définissant cette analyse sont communiqués au module d'analyse MA par l'interface I,
- à des troisièmes moyens de mémorisation BD3, dans lesquels sont stockées les données d'analyse du réseau, pour extraire les données d'analyse qui correspondent aux analyses sélectionnées et/ou qui ont été sélectionnées par l'utilisateur.

Les troisièmes moyens de mémorisation BD3 peuvent se présenter sous n'importe quelle forme, et par exemple sous la forme d'une base de données ou d'une mémoire. Comme cela est illustré sur l'unique figure, ces troisièmes moyens de mémorisation BD3 sont généralement implantés dans le NMS.

Une fois que le module d'analyse MA est en possession de toutes les données précitées, il peut procéder à chaque analyse sélectionnée par l'utilisateur sur les données d'analyse choisies, compte tenu des positions respectives des éléments de réseau sélectionnés et du type de résultat sélectionné.

Les résultats de chaque analyse sont ensuite délivrés au système (ou outil) d'optimisation et/ou de gestion et/ou de supervision OO par le module d'analyse MA sous une forme cartographique, c'est-à-dire rattachés aux positions géographiques des éléments de réseau sélectionnés et à la liste de ces éléments de réseau.

Certains de ces résultats d'analyses peuvent être délivrés sous la forme de listes d'objets destinées par exemple à permettre la définition ou l'affinage d'ensembles d'objets (ou « object zones ») ou la réalisation de diagnostics.

Les résultats d'analyse cartographique peuvent alors être exploités par le système d'optimisation et/ou de gestion et/ou de supervision de réseau OO.

Au moins trois types d'exploitation peuvent être envisagés.

Un premier type concerne l'exploitation visuelle des résultats d'analyse cartographique par l'utilisateur. Dans ce cas, le système d'optimisation et/ou de gestion et/ou de supervision de réseau OO dispose d'un module d'affichage de données MF, comportant un écran (par exemple d'ordinateur), qui lui permet d'afficher une carte matérialisant les résultats d'au moins une analyse cartographique.

Un deuxième type concerne la définition ou l'affinage d'ensembles d'objets (ou « object zones ») à partir des résultats d'analyses cartographiques délivrés par le dispositif d'analyse D.

Il est rappelé qu'on entend ici par « ensemble d'objets » un groupe d'éléments de réseau (ou d'objets réseau) vérifiant un ou plusieurs critères choisis. En d'autres termes les objets réseau vérifiant ce ou ces critères sont sélectionnés pour constituer un ensemble d'objets. Parmi les critères possibles, on peut par exemple citer ceux basés sur des paramètres de configuration radio, ceux basés sur des indicateurs de qualité de service ou QoS (et notamment sur un modèle de trafic, éventuellement « de base »), ceux basés sur des paramètres de topologie du réseau, ceux basés sur des caractéristiques de cellules, ceux basés sur des paramètres de relation de voisinage entre cellules, ceux de type géo-marketing, ceux de type géographique, et ceux de type temporel.

Par ailleurs, on entend ici par « modèle de trafic » tout modèle représentatif de l'évolution d'un trafic (de voix et/ou de données), en terme de volume de télécommunication, et/ou relatif à la façon dont se déroule une communication associée à un trafic, comme par exemple la durée d'une communication, au niveau d'un élément de réseau. En d'autres termes, un modèle de trafic constitue la signature d'un trafic au niveau d'un élément de réseau. En outre, on entend ici par « modèle de trafic de base » un modèle représentatif d'un type de trafic et généralement destiné à être comparé à un modèle de trafic. De plus, on entend ici par « type de trafic », un trafic caractéristique d'une zone géographique ou d'un environnement. Par exemple, on peut définir des modèles de trafic de base correspondant respectivement à des trafics dans des zones d'habitation, des zones d'affaires et des centres commerciaux.

Pour permettre la définition ou l'affinage d'ensembles d'objets, le système d'optimisation et/ou de gestion et/ou de supervision de réseau OO comprend un module de définition MC dans lequel sont stockées les définitions des modèles de trafic de base et chargé de comparer les modèles de trafic (mesurés), correspondant à des éléments de réseau, aux modèles de trafic de base, afin de constituer des ensembles d'objets.

Les résultats des analyses cartographiques peuvent être automatiquement utilisés par le module de définition MC pour affiner des définitions d'ensembles d'objets, éventuellement en fonction d'instructions fournies par l'utilisateur après une éventuelle visualisation desdits résultats grâce au module d'affichage de données MF.

Ces résultats peuvent être également visualisés par l'utilisateur grâce au module d'affichage de données MF, pour qu'il mette au point une stratégie de définition ou d'affinage d'ensembles d'objets puis ordonne au module de définition MC de définir ou affiner des ensemble(s) d'objet(s), compte tenu d'instructions et éventuellement des résultats d'au moins une analyse cartographique.

Cette utilisation est facilitée lorsque le module d'analyse MA délivre des résultats d'analyses sous la forme de listes d'objets, comme évoqué précédemment.

Un troisième type concerne la réalisation de diagnostics de cause(s) de problème(s) survenant au sein du réseau de communication.

Comme le sait l'homme de l'art, des outils de diagnostic ont été créés afin de déterminer les causes de problèmes survenant au sein des réseaux de communication, comme par exemple la baisse de la qualité de service (ou QoS).

Parmi ces outils de diagnostic, certains utilisent des arbres de diagnostic pour déterminer des causes de problèmes. Un arbre de diagnostic est une structure constituée de noeuds associés chacun à un ou plusieurs tests de réseau et reliés entre eux par des branches représentatives de relations logiques entre tests, dites relations de causalité. Les feuilles (ou terminaisons) d'un arbre de diagnostic correspondent à des causes particulières de problème (causes explicatives de l'origine d'un problème), les noeuds pères de ces feuilles correspondent aux causes de ces causes particulières, et ainsi de suite jusqu'à ce que l'on atteigne le noeud racine de l'arbre qui correspond à une cause racine correspondant au problème racine à expliquer.

Pour déterminer chaque cause particulière à l'origine d'un problème (racine), on parcourt l'arbre de diagnostic, qui correspond à ce problème, en partant de son noeud racine et en allant vers un ou plusieurs de ses noeuds feuilles. Les résultats des tests définis en chaque noeud du parcours sont censés permettre de déterminer précisément chaque cause d'un problème, afin de pouvoir y remédier efficacement.

D'autres outils de diagnostic reposent sur l'utilisation de réseaux Bayesiens. Un réseau Bayesien est un arbre de causalité constitué de branches (ou liens) associé(e)s respectivement à des probabilités complémentaires et comportant des noeuds désignant des tests de base (ou élémentaires) à effectuer.

Pour permettre la réalisation de diagnostics, le système d'optimisation et/ou de gestion et/ou de supervision de réseau OO comprend un module (ou outil) de diagnostic MD, par exemple de l'un des types précités.

Les résultats des analyses cartographiques, qui sont délivrés par le dispositif d'analyse D, peuvent soit être mis en correspondance des résultats d'un diagnostic, de manière à tenter de trouver une correspondance entre eux, soit alimenter le module (ou outil) de diagnostic MD afin qu'il détermine des éléments de réseau posant problème et tente de trouver la (ou les) cause(s) de ce(s) problème(s).

Lorsque le module d'analyse MA délivre des résultats d'analyses sous la forme de listes d'objets, celles-ci peuvent être utilisées automatiquement par le module (ou outil) de diagnostic MD pour exécuter certains diagnostics pour chaque objet (ou élément) qu'elles contiennent, éventuellement en cas de franchissement de seuil.

Selon le mode de réalisation du système d'optimisation et/ou de gestion et/ou de supervision de réseau OO, il peut comprendre un module d'affichage de données MF et un module de définition d'ensembles d'objets MC et/ou un module de diagnostic MD.

Le dispositif d'analyse D selon l'invention, et notamment son module d'analyse MA, son interface I, ses éventuels moyens de mémorisation BD1 et/ou BD2 et son éventuel éditeur ED, peuvent être réalisés sous la forme de circuits électroniques, de modules logiciels (ou informatiques), ou d'une combinaison de circuits et de logiciels.

Il est important de noter que les résultats des analyses cartographiques peuvent être également utilisés en entrée d'autres fonctions d'analyse, comme par exemple l'analyse de la qualité de service (QoS), la comparaison entre valeurs planifiées et valeurs opérationnelles de paramètres ou indicateurs.

L'invention ne se limite pas aux modes de réalisation de dispositif d'analyse et de système d'optimisation et/ou de gestion et/ou de supervision de réseau décrits ci-avant, seulement à titre d'exemple, mais elle englobe toutes les variantes que pourra envisager l'homme de l'art dans le cadre des revendications ci-après.

## Revendications

1. Dispositif d'analyse de données d'analyse (D), pour un système d'optimisation et/ou de gestion et/ou de supervision (OO) d'un réseau de communication comportant des éléments de réseau (Ci) de positions géographiques connues et par lesquels passent des trafics définis localement par des données d'analyse, **caractérisé en ce qu'**il comprend :
- une interface (I) agencée pour permettre une sélection i) d'éléments de réseau (Ci), ii) d'au moins une analyse à effectuer sur des données d'analyse choisies relatives auxdits éléments de réseau sélectionnés, et iii) d'au moins un type de résultat d'analyse, et
- des moyens d'analyse (MA) agencés pour effectuer chaque analyse sélectionnée sur lesdites données d'analyse choisies, compte tenu des positions respectives desdits éléments de réseau sélectionnés, et pour délivrer sous une forme cartographique des résultats d'analyse conformément audit type sélectionné, en vue d'une exploitation par ledit système d'optimisation et/ou de gestion et/ou de supervision de réseau (00).

2. Dispositif selon la revendication 1, **caractérisé en ce que** ladite interface (I) est agencée pour permettre la définition d'une zone géographique d'analyse contenant lesdits éléments de réseau sélectionnés (Ci).

3. Dispositif selon la revendication 2, **caractérisé en ce que** ladite interface (I) est agencée pour permettre la définition d'une zone géographique d'analyse en fonction d'au moins un critère choisi.

4. Dispositif selon la revendication 3, **caractérisé en ce que** ledit critère est choisi dans un groupe comprenant au moins un critère d'appartenance à une zone de géométrie prédéfinie au sein d'une région et un critère d'appartenance à un environnement d'un type choisi au sein d'une région.

5. Dispositif selon l'une des revendications 2 à 4, **caractérisé en ce que** lesdits moyens d'analyse (MA) sont agencés pour effectuer chaque analyse sélectionnée sur les données d'analyse choisies relatives à tous les éléments de réseau (Ci) contenus dans ladite zone géographique d'analyse.

6. Dispositif selon l'une des revendications 1 à 5, **caractérisé en ce qu'**il comprend des premiers moyens de stockage (BD1) dans lesquels sont stockées des données représentatives des positions géographiques des éléments de réseau (Ci), et **en ce que** lesdits moyens d'analyse (MA) sont agencés pour accéder auxdits premiers moyens de stockage (BD1) pour extraire les données de position des éléments de réseau sélectionnés, en vue d'effectuer lesdites analyses sélectionnées sur lesdites données d'analyse choisies.

7. Dispositif selon l'une des revendications 1 à 6, **caractérisé en ce qu'**il comprend des seconds moyens de stockage (BD2) dans lesquels sont stockées des données définissant des analyses, et **en ce que** lesdits moyens d'analyse (MA) sont agencés pour accéder auxdits seconds moyens de stockage (BD2) pour extraire les données définissant certaines au moins des analyses sélectionnées, en vue d'effectuer ces analyses sur lesdites données d'analyse choisies.

8. Dispositif selon l'une des revendications 1 à 7, **caractérisé en ce que** ladite interface (1) est agencée pour permettre la définition de certaines au moins des analyses sélectionnées et/ou de nouvelles analyses.

9. Dispositif selon l'une des revendications 1 à 8, **caractérisé en ce que** certaines au moins desdites analyses sont choisies dans un groupe comprenant au moins une analyse de convergence et/ou divergence de données d'analyse par rapport à des données de référence, une analyse d'adéquation et/ou d'inadéquation de capacités d'éléments de réseau (Ci) en fonction de trafics observés, une analyse d'interférence entre éléments de réseau voisins, une analyse d'utilisation d'éléments de réseau (Ci) par rapport à un territoire, et une analyse de flux de trafic.

10. Dispositif selon l'une des revendications 1 à 9, **caractérisé en ce que** certains résultats d'analyses sont délivrés sous la forme d'une liste d'objets destinée à permettre la définition ou l'affinage d'ensembles d'objets.

11. Système d'optimisation et/ou de gestion et/ou de supervision de réseau (OO) pour un réseau de communication comportant des éléments de réseau (Ci) de positions géographiques connues et par lesquels passent des trafics définis localement par des données d'analyse, **caractérisé en ce qu'**il comprend un dispositif d'analyse (D) selon l'une des revendications précédentes.

12. Système d'optimisation et/ou de gestion et/ou de supervision de réseau selon la revendication 11, **caractérisé en ce qu'**il est agencé pour afficher des résultats d'analyse délivrés par ledit dispositif d'analyse (D) de manière à permettre leur exploitation visuelle.

13. Système d'optimisation et/ou de gestion et/ou de supervision de réseau selon l'une des revendications 11 et 12, **caractérisé en ce qu'**il est agencé pour définir ou affiner, à partir des résultats d'analyse délivrés par ledit dispositif d'analyse (D), des ensembles d'objets regroupant chacun des éléments de réseau (Ci).

14. Système d'optimisation et/ou de gestion et/ou de supervision de réseau selon l'une des revendications 11 à 13, **caractérisé en ce qu'**il est agencé pour effectuer des diagnostics de cause(s) de problème(s) survenant au sein dudit réseau de communication à partir de résultats d'analyse délivrés par ledit dispositif d'analyse (D).
